# EUROPÄISCHE PATENTSCHRIFT

(11) **EP 4 050 703 B1**
(45) Veröffentlichungstag und Bekanntmachung des Hinweises auf die Patenterteilung: **09.04.2025**
(21) Anmeldenummer: 22155940.4
(22) Anmeldetag: 09.02.2022
(51) Int. Cl.: H01M 50/105, H01M 50/578

(54) **BATTERIEZELLE MIT KLEMMKONTAKT, BATTERIESYSTEM UND KRAFTFAHRZEUG**
BATTERY CELL WITH CLAMPING CONTACT, BATTERY SYSTEM AND MOTOR VEHICLE
ÉLÉMENT DE BATTERIE À CONTACT DE SERRAGE, SYSTÈME DE BATTERIE ET?VÉHICULE AUTOMOBILE

(30) Priorität: 26.02.2021 DE 102021104716
(43) Veröffentlichungstag der Anmeldung: 31.08.2022
(73) Patentinhaber: PowerCo SE, 38239 Salzgitter (DE)
(72) Erfinder: Lackenmacher, Lutz, 38531 Rötgesbüttel (DE); Hennig, Jakob, 38124 Braunschweig (DE); Klink, Marcus, 38228 Salzgitter (DE); Arndt, Carolin, 38114 Braunschweig (DE); Wesche, Frank, 38458 Velpke (DE); Misir, Onur, 30455 Hannover (DE)
(74) Vertreter: Bals & Vogel Patentanwälte PartGmbB

(56) Entgegenhaltungen:
- EP-A1- 3 246 966
- EP-A1- 3 267 512
- EP-A1- 3 627 591
- US-A1- 2019 379 032

## Beschreibung

Die vorliegende Erfindung betrifft eine Batteriezelle für ein Batteriesystem für ein Kraftfahrzeug. Ferner betrifft die Erfindung ein Batteriesystem für ein Kraftfahrzeug mit einer gattungsgemäßen Batteriezelle sowie ein Kraftfahrzeug mit einem gattungsgemäßen Batteriesystem.

Es sind zylindrische sowie prismatische Batteriezellen bekannt, die zum Schutz der Batteriezelle, insbesondere vor einem thermischen Durchgehen, eine Sicherheitsvorrichtung, wie beispielsweise ein Current Interrupt Device (CID) oder ein Overcharging Safety Device (OSD), aufweisen. Üblicherweise weisen derartige Sicherheitsvorrichtungen eine Sicherheitsschaltung auf, welche bei einem kritischen Innendruck, einer kritischen Innentemperatur oder einer kritischen Gaskonzentration innerhalb der Zelle eine elektrische Kopplung zwischen dem Aktivmaterial der Batteriezelle, welches beispielsweise zu einem Zellwickel zusammengefasst ist, und einen aus der Batteriezelle herausgeführten elektrischen Pol unterbricht. Derartige Sicherheitsvorrichtungen sind für als Pouchzellen ausgebildete Batteriezellen derzeit nur sehr aufwendig umsetzbar.

Aus der DE 10 2016 110 778 A1, welche die Basis für den Oberbegriff des Anspruches 1 bildet, ist eine als Pouchzelle ausgebildete Batteriezelle mit einer Schutzvorrichtung bekannt, bei welcher eine elektrische Kopplung eines ersten Innenleiters der Batteriezelle mit einem zweiten Innenleiter der Batteriezelle in Abhängigkeit einer Ausdehnung der Batteriezelle trennbar ist. Hierfür ist der zweite Innenleiter an einer unteren Zellwandung gehalten, beispielsweise über eine Klebeschicht, und über einen Biegeabschnitt mit einem ersten Abschnitt des ersten Innenleiters elektrisch gekoppelt. Der erste Abschnitt ist an einer oberen Zellwandung der Batteriezelle gehalten, beispielsweise über eine Klebeschicht, und über eine Sollbruchstelle mit einem zweiten Abschnitt des ersten Innenleiters elektrisch gekoppelt. Der zweite Abschnitt ist über eine elektrisch isolierende Klebeschicht an dem zweiten Innenleiter gekoppelt. Bei einer kritischen Ausdehnung der Batteriezelle ist die obere Zellwandung derart von der unteren Zellwandung entfernt, dass der Biegeabschnitt zumindest teilweise plastisch verformt und die Sollbruchstelle aufgebrochen ist. Die elektrische Kopplung zwischen dem ersten Abschnitt und dem zweiten Abschnitt des ersten Innenleiters ist somit unterbrochen. Auf diese Weise ist die Batteriezelle automatisch von einem restlichen Batteriesystem abtrennbar. Der Biegebereich ist ausgebildet, bei einer Rückverformung der Batteriezelle etwas von der plastischen Verformung beizubehalten, sodass eine Unterbrechung der elektrischen Kopplung zwischen dem ersten Abschnitt und dem zweiten Abschnitt des ersten Innenleiters weiterhin bestehen bleibt. Die Dokumente EP 3 267 512 A1 und EP 3 627 591 A1 offenbaren weitere Batteriezellen mit einer elektrischen Trennvorrichtung.

Bekannte als Pouchzellen ausgebildete Batteriezellen mit einer Schutzvorrichtung haben den Nachteil, dass zum Unterbrechen der elektrischen Kopplung eine größere Verformung einer Zellwandung erforderlich ist. Dies ist insbesondere bei Batteriesystemen mit einer Druckvorrichtung problematisch, mittels welcher die Batteriezellen zur Steigerung der Leistungsfähigkeit sowie zur Erhöhung der Lebensdauer zusammendrückbar sind.

Es ist daher Aufgabe der vorliegenden Erfindung, die voranstehend beschriebenen Nachteile bei eine Batteriezelle zu beheben oder zumindest teilweise zu beheben. Insbesondere ist es Aufgabe der vorliegenden Erfindung eine Batteriezelle, ein Batteriesystem und ein Kraftfahrzeug zu schaffen, die auf eine einfache und kostengünstige Art und Weise eine verbesserte Unterbrechung der elektrischen Kopplung einer defekten Batteriezelle zu weiteren Batteriezellen des Batteriesystems sicherstellen.

Voranstehende Aufgabe wird durch die Patentansprüche gelöst. Demnach wird die Aufgabe durch eine Batteriezelle für ein Batteriesystem für ein Kraftfahrzeug mit den Merkmalen des unabhängigen Anspruchs 1, durch ein Batteriesystem für ein Kraftfahrzeug mit den Merkmalen des nebengeordneten Anspruchs 8 sowie durch ein Kraftfahrzeug mit den Merkmalen des nebengeordneten Anspruchs 9 gelöst.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Batteriezelle beschrieben sind, selbstverständlich auch im Zusammenhang mit dem erfindungsgemäßen Batteriesystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Batteriezelle für ein Batteriesystem für ein Kraftfahrzeug gelöst. Die Batteriezelle weist eine flexible Zellwandung, einen von der Zellwandung gebildeten Zellinnenraum, in dem Zellinnenraum angeordnetes Aktivmaterial zum Speichern und Freigeben elektrischer Energie, eine im Zellinnenraum angeordnete, mit dem Aktivmaterial elektrisch gekoppelte Elektrode und einen aus dem Zellinnenraum herausragenden sowie in einem Ausgangszustand mit der Elektrode elektrisch gekoppelten Ableiter auf. Im Ausgangszustand ist ein Druckunterschied zwischen einem Zellinnendruck im Zellinnenraum und einem Zellaußendruck außerhalb des Zellinnenraums kleiner als ein vorgegebener Druckschwellwert. Erfindungsgemäß sind die Elektrode und der Ableiter im Ausgangszustand zur Herstellung der elektrischen Kopplung zwischen einem ersten Wandungsabschnitt und einem zweiten Wandungsabschnitt der Zellwandung gegeneinandergedrückt, wobei die Batteriezelle eine Ablösevorrichtung zum Aufheben der elektrischen Kopplung in einem Unterbrechungszustand aufweist. Der Druckunterschied entspricht im Unterbrechungszustand dem Druckschwellwert, wobei die Ablösevorrichtung ausgebildet ist, mit dem Ableiter oder der Elektrode vom Ausgangszustand in den Unterbrechungszustand einer Bewegung des ersten Wandungsabschnitts vom zweiten Wandungsabschnitt weg derart zu folgen, dass im Unterbrechungszustand zwischen dem Ableiter und der Elektrode ein Spalt ausgebildet ist. Die Ablösevorrichtung weist eine Druckvorrichtung auf, wobei die Druckvorrichtung im Ausgangszustand eine durch den Druckunterschied aufrechterhaltene Vorspannung aufweist und ausgebildet ist, den Ableiter von der Elektrode wegweisend oder die Elektrode vom Ableiter wegweisend in Richtung des ersten Wandungsabschnitts zu drücken.

Das Batteriesystem ist vorzugsweise zum Betreiben eines Elektromotors und einer Leistungselektronik des Kraftfahrzeugs ausgebildet. Die Batteriezelle ist vorzugsweise als Pouchzelle ausgebildet. Die Zellwandung ist aus einem flexiblen Material gebildet, wie beispielsweise Aluminium oder dergleichen. Vorzugsweise ist die Zellwandung folienartig ausgebildet. Ferner weist die Zellwandung mindestens eine Naht zum Bilden eines nach außen abgedichteten Zellinnenraums auf. Die Naht ist vorzugsweise als Schweißnaht, Klebenaht oder dergleichen ausgebildet.

Die Zellwandung ist flexibel ausgebildet und bildet den Zellinnenraum. Nahtstellen der Zellwandungen sind vorzugsweise durch Schweißen, Kleben oder dergleichen versiegelt, vorzugsweise derart, dass der Zellinnenraum gasdicht verschossen ist. Durch die flexible Ausbildung der Zellwandung ist der Zellinnenraum durch Erhöhung des Zellinnendrucks, beispielsweise durch aus dem Aktivmaterial austretendes Zellgas, insbesondere in Folge eines thermischen Durchgehens des Aktivmaterials, expandierbar. Die äußeren Abmessungen der Batteriezelle, wie beispielsweise eine Dicke, sind auf diese Weise vergrößerbar. Vorzugsweise weist die Zellwandung Aluminium auf oder ist aus Aluminium gebildet. Weiter bevorzugt weist die Zellwandung, insbesondere auf einer nach außen gerichteten Wandungsseite, besonders bevorzugt auf beiden Seiten, ein elektrisch isolierendes Material, insbesondere in Form einer durchgängigen Schicht, auf.

Das Aktivmaterial ist im Zellinnenraum angeordnet. Unter einem Aktivmaterial wird im Rahmen der Erfindung ein Werkstoff bzw. ein Werkstoffgemisch verstanden, welches die Speicherung sowie Abgabe elektrischer Energie über Ableiter der Batteriezelle gewährleistet. Das Aktivmaterial weist vorzugsweise Lithiumionen auf. Das Aktivmaterial kann erfindungsgemäß in Schichtform, insbesondere gestapelt oder gefaltet, im Zellinnenraum angeordnet sein.

Die Elektrode ist zum Bereitstellen der elektrischen Kopplung des Aktivmaterials mit dem Ableiter ausgebildet. Der Ableiter ist zum Bereitstellen der elektrischen Kopplung der Elektrode mit weiteren Komponenten des Batteriesystems, wie beispielsweise weiteren Batteriezellen, insbesondere im Rahmen einer Serienschaltung oder Reihenschaltung, oder einem Hauptableiter des Batteriesystems zum Abgeben elektrischer Energie an elektrische Verbraucher des Kraftfahrzeugs sowie zum Einleiten elektrischer Energie zum Aufladen der Batteriezellen ausgebildet. Zur Bereitstellung der elektrischen Kopplung weist die Ableitervorrichtung den ersten Ableiterabschnitt und den zweiten Ableiterabschnitt auf.

Im Ausgangszustand ist der Zellinnendruck im Zellinnenraum geringer als der Zellaußendruck. Vorzugsweise ist der Zellinnendruck geringer als der Atmosphärendruck, besonders bevorzugt ist der Zellinnendruck als Vakuum ausgebildet, insbesondere als Feinvakuum oder Hochvakuum. Die Zellwandung ist vorzugsweise ausgebildet und abgedichtet, das Vakuum zu halten. Weiter bevorzugt entspricht der Zellaußendruck dem Atmosphärendruck. Die Elektrode und der Ableiter sind durch den zwischen dem Zellinnendruck und Zellaußendruck bestehenden Druckunterschied zwischen den ersten Wandungsabschnitt und den zweiten Wandungsabschnitt der Zellwandung gegeneinandergedrückt. Auf diese Weise ist eine zuverlässige sowie erschütterungsbeständige elektrische Kopplung zwischen der Elektrode und dem Ableiter sichergestellt. Ferner ist somit das Aktivmaterial der Batteriezelle mit dem Ableiter elektrisch gekoppelt.

Die Ablösevorrichtung ist ausgebildet, im Unterbrechungszustand die elektrische Kopplung zwischen der Elektrode und dem Ableiter zu unterbrechen. Hierfür ist die Ablösevorrichtung ausgebildet, den Ableiter oder die Elektrode zusammen mit dem ersten Wandungsabschnitt von dem Ausgangszustand in den Unterbrechungszustand zu bewegen. Unter einem Unterbrechungszustand wird ein Zustand verstanden, bei welchem die elektrische Kopplung zwischen Elektrode und Ableiter vollständig unterbrochen ist. Eine weitere Entfernung sowie ein erneutes Annähern von Elektrode und Ableiter ohne Wiederherstellung der elektrischen Kopplung können im Rahmen der Erfindung ebenfalls als Unterbrechungszustand bezeichnet werden. Im Unterbrechungszustand ist bei einer nicht geöffneten Zellwandung der Zellinnendruck vorzugsweise größer als im Ausgangszustand. Ferner ist ein Abstand zwischen dem ersten Wandungsabschnitt und dem zweiten Wandungsabschnitt im Unterbrechungszustand größer als im Ausgangszustand. Auf diese Weise ist im Unterbrechungszustand ein Spalt zwischen der Elektrode und dem Ableiter ausgebildet. Die Ablösevorrichtung kann erfindungsgemäß als Komponente ohne mechanischen Energiespeicher oder Komponente mit mechanischem Energiespeicher ausgebildet sein. Der mechanische Energiespeicher ist ausgebildet, im Ausgangszustand Energie zu speichern und diese im Unterbrechungszustand freizugeben. Vorzugsweise weist die Ablösevorrichtung eine Rückstellsperre zum Verhindern einer Rückstellung vom Unterbrechungszustand in den Ausgangszustand auf. Auf diese Weise ist gewährleistet, dass ein selbstständiges erneutes elektrisches Koppeln der Batteriezelle nach einem selbstständigen elektrischen Entkoppeln vermieden ist.

Der Druckschwellwert ist vorzugsweise in Abhängigkeit mechanischer sowie chemischer bzw. elektrochemischer Kennwerte der Batteriezelle festgelegt und bestimmt, bei welchem Druckunterschied eine Trennung der elektrischen Kopplung der Batteriezelle vom Rest des Batteriesystems erfolgen soll, um weitere Schäden an der Batteriezelle sowie am Batteriesystem zu vermeiden oder zumindest zu reduzieren. Der Druckschwellwert liegt vorzugsweise unter einem kritischen Druck bei welchem ein Öffnen der Nähte der Zellwandung droht. Auf diese Weise ist verhinderbar, dass Zellgas durch eine defekte Naht entweicht und somit der Druckschwellwert im Zellinnenraum nicht oder mit erheblicher Verzögerung, beispielsweise, wenn die Batteriezelle bereits thermisch durchgeht, erreicht wird.

Gemäß der Erfindung weist die Ablösevorrichtung eine Druckvorrichtung auf, wobei die Druckvorrichtung im Ausgangszustand eine durch den Druckunterschied aufrechterhaltene Vorspannung aufweist und ausgebildet ist, den Ableiter von der Elektrode wegweisend oder die Elektrode vom Ableiter wegweisend in Richtung des ersten Wandungsabschnitts zu drücken. Unter einer Druckvorrichtung wird im Rahmen der Erfindung eine Vorrichtung zur Speicherung mechanischer Energie verstanden. Die Druckvorrichtung ist ausgebildet, eine Druckkraft bereitzustellen, mittels welcher - bei Ausbleiben einer ausreichenden Gegenkraft - die Elektrode und der Ableiter voneinander weg bewegbar sind, beispielsweise durch Drücken gegen die Elektrode und/oder den Ableiter. Durch den Druckunterschied zwischen dem Zellaußendruck und dem Zellinnentruck im Ausgangszustand ist die Druckvorrichtung zusammengedrückt. Wenn der Druckunterschied derart abnimmt, dass der Druckschwellwert erreicht ist, ist die Druckvorrichtung zum Auseinanderdrücken von Elektrode und Ableiter expandierbar. Bei Verwendung einer Druckvorrichtung ist eine mechanische Entkopplung zum ersten Wandungsabschnitt möglich, sodass zwischen dem Ausgangszustand beispielsweise ein gemeinsames Bewegen vom ersten Wandungsabschnitt und dem Ableiter bzw. der Elektrode bis zum Unterbrechungszustand gewährleistet ist. Wenn die Druckvorrichtung einen entspannten Zustand erreich hat, könnte eine weitere Bewegung des ersten Wandungsabschnitt von der entspannten Druckvorrichtung weg weiterhin möglich sein. Dies hat den Vorteil, dass mit einfachen Mitteln sowie auf eine kostengünstige Art und Weise ein zuverlässiges elektrisches Entkoppeln von Elektrode und Ableiter realisierbar ist.

Die Batteriezelle weist vorzugsweise eine Signalvorrichtung auf, die zum Ausgeben eines Signals ausgebildet ist, wenn die Elektrode vom Ableiter elektrisch entkoppelt ist. Die Signalvorrichtung weist vorzugsweise einen feststehenden ersten elektrischen Kontakt sowie einen mit dem ersten Wandungsabschnitt mitbewegbaren zweiten elektrischen Kontakt auf. Im Ausgangszustand sind der erste elektrische Kontakt und der zweite elektrische Kontakt vorzugsweise voneinander getrennt. Im Unterbrechungszustand kontaktiert der erste elektrische Kontakt den zweiten elektrischen Kontakt vorzugsweise derart, dass ein Stromkreis geschlossen ist. Die Signalvorrichtung kann erfindungsgemäß innerhalb und/oder außerhalb der Batteriezelle angeordnet sein. Eine außerhalb der Batteriezelle angeordnete Signalvorrichtung hat den Vorteil, dass keine Signalleitungen aus der Batteriezelle herausgeführt werden müssen. Auf diese Weise ist das elektrische Abkoppeln einer konkreten Batteriezelle eines Batteriesystems zuverlässig sowie mit einfachen Mitteln und kostengünstig detektierbar.

Eine erfindungsgemäße Batteriezelle hat gegenüber herkömmlichen Batteriezellen den Vorteil, dass mit einfachen Mitteln sowie auf eine kostengünstige Art und Weise eine Unterbrechung der elektrischen Kopplung zwischen der Elektrode und dem Ableiter automatisch bewirkbar ist, wenn das Verhältnis zwischen Zellinnendruck und Zellaußendruck einen kritischen Grenzwert übersteigt. Durch die Wirkkopplung der Ablösevorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Batteriezellensystems erheblich reduziert und eine Betriebssicherheit der Batteriezelle gegenüber herkömmlichen Batteriezellen wesentlich verbessert.

Es ist erfindungsgemäß bevorzugt, dass die Druckvorrichtung eine Druckfeder und/oder einen Druckzylinder und/oder einen Druckschaum aufweist oder dass die Druckvorrichtung durch eine Eigenspannung des Ableiters oder der Elektrode realisiert ist. Eine Druckfeder ist vorzugsweise als Schraubenfeder ausgebildet. Ein Druckschaum ist ein poröses Material, welches unter Aufbau einer Druckspannung komprimierbar ist. Das poröse Material kann erfindungsgemäß offenporig und/oder geschlossenporig ausgebildet sein. Bei einer geschlossenporigen Ausbildung ist in den Poren vorzugsweise ein Inertgas, wie beispielsweise Stickstoff, Argon oder dergleichen, insbesondere mit einem Inertgasanteil von mindestens 95%, angeordnet. In einem Druckzylinder ist vorzugsweise ein Druckkolben angeordnet sowie translatorisch geführt. Ein Druckmedium im Druckzylinder ist vorzugsweise nicht brennbar bzw. nicht explosibel, wie beispielsweise ein Inertgas. Zur Bereitstellung der Eigenspannung weist der jeweilige Ableiter oder die Elektrode ein elastisches Material auf. Vorzugsweise ist der Ableiter bzw. die Elektrode hierfür gemäß einer Schenkelfeder ausgebildet. Eine derartige Druckvorrichtung ist mit einfachen Mitteln sowie auf eine kostengünstige Art und Weise herstellbar und vorspannbar. Zudem ist mittels einer derartigen Druckvorrichtung ein zuverlässiges Unterbrechen der elektrischen Kopplung zwischen der Elektrode und dem Ableiter gewährleistet.

Weiter bevorzugt weist die Ablösevorrichtung eine Haltevorrichtung auf, wobei die Haltevorrichtung ausgebildet ist, den Ableiter oder die Elektrode am ersten Wandungsabschnitt zu halten. Mittels der Haltevorrichtung ist eine Bewegung des Ableiters bzw. der Elektrode mit dem ersten Wandungsabschnitt derart koppelbar, dass der Ableiter bzw. die Elektrode der Bewegung des ersten Wandungsabschnitts solange folgt, wie die Haltevorrichtung intakt ist. Demnach ist die Haltevorrichtung vorzugsweise derart ausgebildet, dass zumindest der Unterbrechungszustand erreichbar ist. Vorzugsweise ist die Haltevorrichtung ausgebildet, das Halten über eine gesamte Bewegungsfreiheit des ersten Wandungsabschnitts beim Ausdehnen des Zellinnenraums zu gewährleisten. Dies hat den Vorteil, dass mit einfachen Mitteln sowie auf eine kostengünstige Art und Weise ein elektrisches Entkoppeln von Elektrode und Ableiter beim Ausdehnen des Zellinnenraums gewährleistet ist.

In einer besonders bevorzugten Ausgestaltung der Erfindung weist die Haltevorrichtung eine Klebestelle und/oder Lötstelle und/oder Schweißstelle und/oder Crimpstelle auf. Die Klebestelle weist vorzugsweise einen Klebstoff auf, der im Betriebstemperaturbereich der Batteriezelle sowie bei Temperaturen während des thermischen Durchgehens der Batteriezelle zumindest solange beständig ist, dass ein zuverlässiges elektrisches Entkoppeln von Elektrode und Ableiter beim Wegbewegen des ersten Wandungsabschnitts gewährleitstet ist. Alternativ kann die Haltevorrichtung eine Hakenvorrichtung zum Einhaken des Ableiters oder der Elektrode aufweisen. Dies hat den Vorteil, dass mit einfachen Mitteln sowie auf eine kostengünstige Art und Weise ein Halten am ersten Wandungsabschnitt und somit ein zuverlässiges elektrisches Entkoppeln von Elektrode und Ableiter gewährleistet ist.

Vorzugsweise sind die Elektrode und der Ableiter im Ausgangszustand durch den zwischen dem Zellinnendruck und Zellaußendruck bestehenden Druckunterschied zwischen den ersten Wandungsabschnitt und den zweiten Wandungsabschnitt gegeneinandergedrückt. Hierbei wirkt der Druckunterschied gegen eine etwaige Druckvorrichtung derart, dass die Druckvorrichtung komprimiert und somit vorgespannt bleibt. Es kann erfindungsgemäß vorgesehen sein, dass die Zellwandung eine plastisch verformbare Stützvorrichtung aufweist. Die Stützvorrichtung ist vorzugsweise im Ausgangszustand sowie im Unterbrechungszustand spannungsfrei oder zumindest im Wesentlichen spannungsfrei und durch die Bewegung des ersten Wandungsabschnitts plastisch verformbar. Somit ist verhinderbar, dass die Zellwandung bei einem Druckausgleich zwischen dem Zellinnendruck und dem Zellaußendruck wieder kollabiert. Dies hat den Vorteil, dass mit einfachen Mitteln sowie auf eine kostengünstige Art und Weise eine zuverlässige elektrische Kopplung sowie Entkopplung von Elektrode und Ableiter gewährleistet ist.

Gemäß einer bevorzugten Ausführungsform der Erfindung weist die Elektrode oder der Ableiter zwischen zwei Grundabschnitten einen Gelenkabschnitt zum Verbessern einer gemeinsamen Bewegung mit dem ersten Wandungsabschnitt auf. Der Gelenkabschnitt ist derart ausgebildet, dass die benachbarten Grundabschnitte beim Bewegen des ersten Wandungsabschnitts aus dem Ausgangszustand in den Unterbrechungszustand um eine durch den Gelenkabschnitt verlaufende Gelenkachse relativ zueinander verschwenkt werden. Durch den Gelenkabschnitt ist somit eine Bewegung besser vordefinierbar. Ferner hat ein Gelenkabschnitt den Vorteil, dass mit einfachen Mitteln sowie auf eine kostengünstige Art und Weise ein mechanischer Widerstand der Elektrode bzw. des Ableiters reduzierbar ist, sodass die gemeinsame Bewegung mit dem ersten Wandungsabschnitt verbessert ist.

Besonders bevorzugt weist der Gelenkabschnitt einen Knick und/oder eine Querschnittsverringerung und/oder eine erhöhte Duktilität als die benachbarten Grundbereiche auf. Der Knick weist vorzugsweise einen Winkel von über 120° auf. Die Querschnittsverringerung beträgt vorzugsweise in eine Richtung zwischen 10% und 30% des Querschnitts. Die erhöhte Duktilität ist beispielsweise durch einen anderen Werkstoff oder eine lokale Wärmebehandlung bewirkbar. Dies hat den Vorteil, dass mit einfachen Mitteln sowie auf eine kostengünstige Art und Weise die gemeinsame Bewegung mit dem ersten Wandungsabschnitt verbessert ist.

Gemäß einem zweiten Aspekt der Erfindung wird die Aufgabe durch ein Batteriesystem für ein Kraftfahrzeug gelöst. Das Batteriesystem weist ein Systemgehäuse auf. Erfindungsgemäß sind innerhalb des Systemgehäuses mehrere erfindungsgemäße Batteriezellen angeordnet. Das Systemgehäuse ist vorzugsweise aus einem verhältnismäßig steifen Material gebildet, um den Batteriezellen einen Schutz vor äußeren mechanischen Einflüssen, wie beispielsweise in Folge einer Kollision des Kraftfahrzeugs, bereitzustellen. Die Batteriezellen sind vorzugsweise miteinander elektrisch verschaltet, beispielsweise in einer Reihenschaltung und/oder Parallelschaltung. Die Batteriezellen sind vorzugsweise zu einem oder mehreren Batteriezellenstapeln zusammengefasst. Überdies weist das Batteriesystem vorzugsweise für einen oder mehrere, vorzugsweise sämtliche Batteriezellenstapel eine Druckvorrichtung zum Zusammendrücken der Batteriezellen des jeweiligen Batteriezellenstapels auf. Das Batteriesystem weist vorzugsweise zwei oder mehrere Hauptableiter zum elektrischen Koppeln des Batteriesystems mit dem Kraftfahrzeug auf. Das Batteriesystem ist vorzugsweise zum Betreiben eines Elektromotors und einer Leistungselektronik des Kraftfahrzeugs ausgebildet.

Bei dem erfindungsgemäßen Batteriesystem ergeben sich sämtliche Vorteile, die bereits zu einer Batteriezelle gemäß dem ersten Aspekt der Erfindung beschrieben worden sind. Demnach hat das erfindungsgemäße Batteriesystem gegenüber herkömmlichen Batteriesystemen den Vorteil, dass mit einfachen Mitteln sowie auf eine kostengünstige Art und Weise eine Unterbrechung der elektrischen Kopplung zwischen der Elektrode und dem Ableiter automatisch bewirkbar ist, wenn das Verhältnis zwischen Zellinnendruck und Zellaußendruck einen kritischen Grenzwert übersteigt. Durch die Wirkkopplung der Ablösevorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Batteriezellensystems erheblich reduziert und eine Betriebssicherheit des Batteriezellensystems gegenüber herkömmlichen Batteriezellensystemen wesentlich verbessert.

Gemäß einem dritten Aspekt der Erfindung wird die Aufgabe durch ein Kraftfahrzeug gelöst. Das Kraftfahrzeug weist ein elektrisches Antriebssystem mit einem Elektromotor zum Antreiben des Kraftfahrzeugs auf. Erfindungsgemäß weist das Antriebssystem zum Versorgen des Elektromotors mit elektrischer Energie ein erfindungsgemäßes Batteriesystem auf. Das Batteriesystem ist mit dem Elektromotor elektrisch gekoppelt, vorzugsweise über eine Leistungselektronik zum Betreiben des Elektromotors. Erfindungsgemäß kann das Kraftfahrzeug mehrere Elektromotoren zum Antreiben des Kraftfahrzeugs aufweisen, insbesondere einen Elektromotor zum Antreiben einer Vorderachse des Kraftfahrzeugs und einen Elektromotor zum Antreiben einer Hinterachse des Kraftfahrzeugs.

Bei dem erfindungsgemäßen Kraftfahrzeug ergeben sich sämtliche Vorteile, die bereits zu einer Batteriezelle gemäß dem ersten Aspekt der Erfindung sowie zu einem Batteriesystem gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine Unterbrechung der elektrischen Kopplung zwischen der Elektrode und dem Ableiter automatisch bewirkbar ist, wenn das Verhältnis zwischen Zellinnendruck und Zellaußendruck einen kritischen Grenzwert übersteigt. Durch die Wirkkopplung der Ablösevorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Kraftfahrzeugs weiter reduziert und eine Betriebssicherheit des Kraftfahrzeugs gegenüber herkömmlichen Kraftfahrzeugen wesentlich verbessert.

Eine erfindungsgemäße Batteriezelle, ein erfindungsgemäßes Batteriesystem sowie ein erfindungsgemäßes Kraftfahrzeug werden nachfolgend anhand von Zeichnungen näher erläutert. Es zeigen jeweils schematisch:
- Figur 1: in einer Schnittdarstellung eine Batteriezelle gemäß einer bevorzugten ersten Ausführungsform der Erfindung in einem Ausgangszustand,
- Figur 2: in einer Schnittdarstellung die Batteriezelle aus Figur 1 in einem Unterbrechungszustand,
- Figur 3: in einer Schnittdarstellung eine Batteriezelle gemäß einer bevorzugten zweiten Ausführungsform der Erfindung in einem Unterbrechungszustand,
- Figur 4: in einer Schnittdarstellung eine Batteriezelle gemäß einer bevorzugten dritten Ausführungsform der Erfindung in einem Unterbrechungszustand,
- Figur 5: in einer Schnittdarstellung ein Batteriesystem gemäß einer bevorzugten Ausführungsform der Erfindung, und
- Figur 6: in einer Seitenansicht eine bevorzugte Ausführungsform eines erfindungsgemäßen Kraftfahrzeugs.

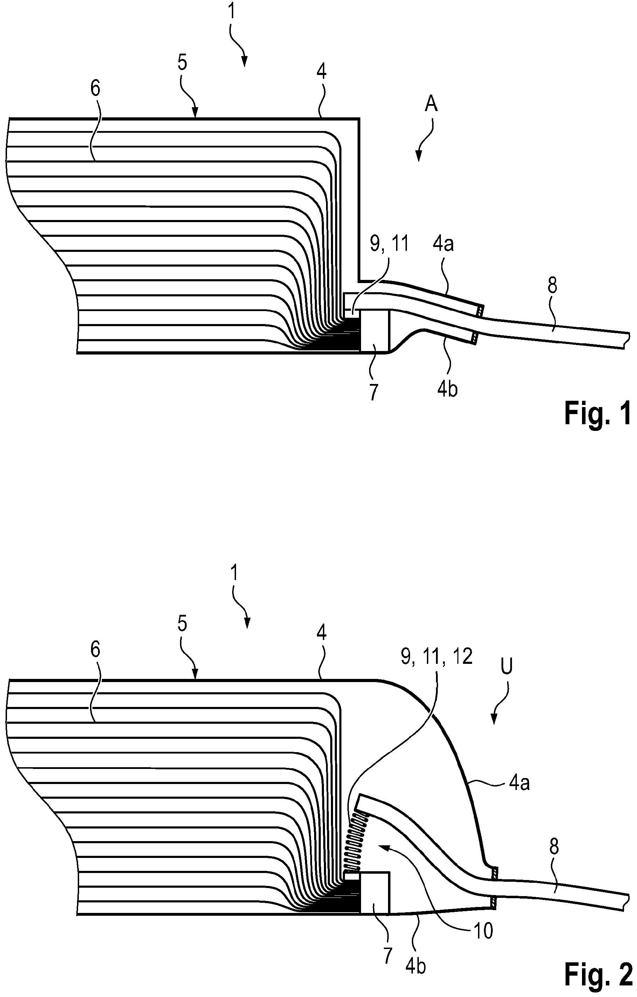

Elemente mit gleicher Funktion und Wirkungsweise sind in den Figuren 1 bis 6 jeweils mit denselben Bezugszeichen versehen.

In Fig. 1 ist die Batteriezelle 1 gemäß einer bevorzugten ersten Ausführungsform der Erfindung in dem Ausgangszustand A schematisch in einer Schnittdarstellung abgebildet. Die Batteriezelle 1 weist eine Zellwandung 4 auf, durch welche ein Zellinnenraum 5 gebildet und nach außen luftdicht abgedichtet ist. Im Zellinnenraum 5 ist zum Speichern und Abgeben elektrischer Energie Aktivmaterial 6 in mehreren Schichten angeordnet. Das Aktivmaterial 6 ist mit der Elektrode 7 der Batteriezelle 1 elektrisch gekoppelt. Ein Ableiter 8 der Batteriezelle 1 ist aus dem Zellinnenraum 5 herausgeführt. Die Elektrode 7 und der Ableiter 8 sind zwischen einem ersten Wandungsabschnitt 4a der Zellwandung 4 und einem zweiten Wandungsabschnitt 4b der Zellwandung 4 unter Einwirkung eines Druckunterschieds zwischen einem Zellinnendruck im Zellinnenraum 5 und einem Zellaußendruck außerhalb des Zellinnenraums 5 zusammengedrückt und somit miteinander elektrisch gekoppelt. Zwischen dem Ableiter 8 und dem zweiten Wandungsabschnitt 4b ist eine als Druckvorrichtung 11 ausgebildete Ablösevorrichtung 9 in einem gespannten Zustand angeordnet. Die Druckvorrichtung 11 stellt eine Gegenkraft zur Druckkraft aufgrund des Druckunterschieds dar.

Fig. 2 zeigt die Batteriezelle 1 gemäß der in Fig. 1 abgebildeten bevorzugten ersten Ausführungsform der Erfindung in dem Unterbrechungszustand U schematisch in einer Schnittdarstellung. In dem Unterbrechungszustand U ist der Druckunterschied zwischen dem Zellinnendruck und dem Zellaußendruck durch Erhöhung des Zellinnendrucks derart erhöht, dass der erste Zellwandungsabschnitt 4a vom zweiten Zellwandungsabschnitt 4b wegbewegt ist. Aufgrund der ausbleibenden Druckkraft gegen den ersten Zellwandungsabschnitt 4a und den zweiten Zellwandungsabschnitt 4b ist der Ableiter 8 mittels der eine Druckfeder 12 aufweisenden Druckvorrichtung 11 von der Elektrode 7 wegbewegt. Auf diese Weise ist zwischen der Elektrode 7 und dem Ableiter 8 ein Spalt 10 ausgebildet und die elektrische Kopplung zwischen der Elektrode 7 und dem Ableiter 8 aufgehoben.

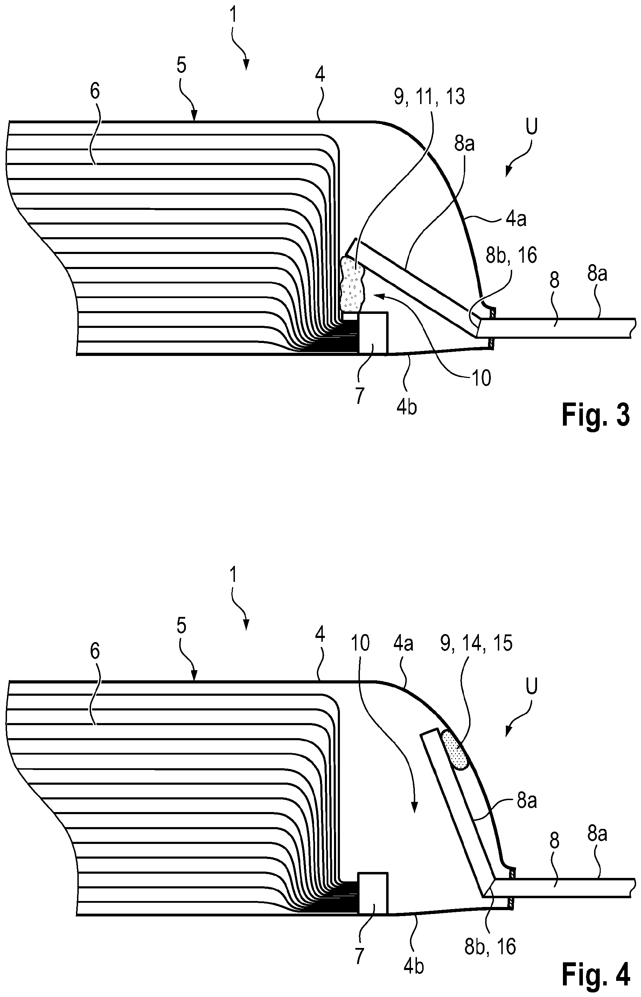

In Fig. 3 ist die Batteriezelle 1 gemäß einer bevorzugten zweiten Ausführungsform der Erfindung in dem Unterbrechungszustand U schematisch in einer Schnittdarstellung abgebildet. Die Batteriezelle 1 gemäß der bevorzugten zweiten Ausführungsform unterscheidet sich von der Batteriezelle 1 gemäß der bevorzugten ersten Ausführungsform in der Ausbildung der Druckvorrichtung 11 und des Ableiters 8. Die Druckvorrichtung 11 weist anstatt einer Druckfeder 12 einen Druckschaum 13 auf. Der Ableiter 8 weist zwischen zwei Grundabschnitten 8a einen als Knick 16 ausgebildeten Gelenkabschnitt 8b auf.

Fig. 4 zeigt die Batteriezelle 1 gemäß der bevorzugten dritten Ausführungsform der Erfindung in dem Unterbrechungszustand U schematisch in einer Schnittdarstellung. Die Batteriezelle 1 gemäß der bevorzugten dritten Ausführungsform unterscheidet sich von der Batteriezelle 1 gemäß der bevorzugten zweiten Ausführungsform in der Ausbildung der Ablösevorrichtung 9. Die Ablösevorrichtung 9 weist eine Haltevorrichtung 14 mit einer Klebestelle 15 auf. Über die Klebestelle 15 ist der Ableiter 8 am ersten Wandungsabschnitt 4a gehalten und somit mit diesem mitbewegt.

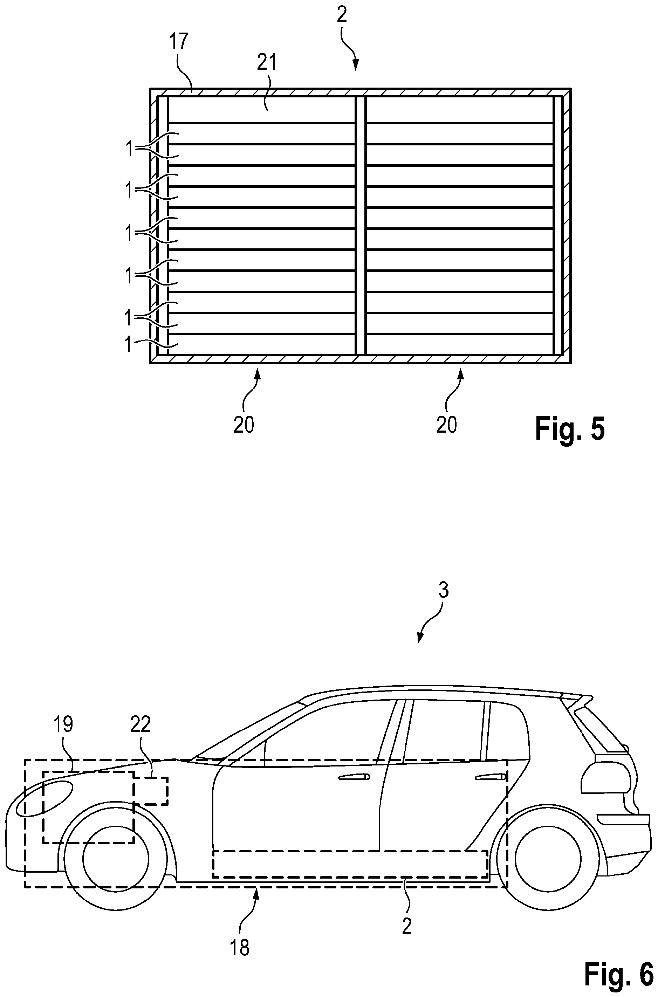

In Fig. 5 ist das Batteriesystem 2 gemäß der bevorzugten Ausführungsform der Erfindung schematisch in einer Schnittdarstellung abgebildet. Das Batteriesystem 2 weist eine Mehrzahl erfindungsgemäßer Batteriezellen 1 auf, die zu mehreren Zellstapeln 20 zusammengefasst und innerhalb eines Systemgehäuses 17 des Batteriesystems 2 angeordnet sind. Die Zellstapel 20 sind jeweils über eine Verspannvorrichtung 21 im Systemgehäuse 17 verspannt.

Fig. 6 zeigt die bevorzugte Ausführungsform des erfindungsgemäßen Kraftfahrzeugs 3 schematisch in einer Seitenansicht. Das Kraftfahrzeug 3 weist ein elektrisches Antriebssystem 18 mit einem Elektromotor 19 zum Antreiben des Kraftfahrzeugs 3, einer Leistungselektronik 22 zum Steuern des Elektromotors 19 sowie einem erfindungsgemäßen Batteriesystem 2 zum Bereitstellen elektrischer Energie zum Betreiben der Leistungselektronik 22 und des Elektromotors 19 auf.

### Bezugszeichenliste

- 1: Batteriezelle
- 2: Batteriesystem
- 3: Kraftfahrzeug
- 4: Zellwandung
- 4a: erster Wandungsabschnitt
- 4b: zweiter Wandungsabschnitt
- 5: Zellinnenraum
- 6: Aktivmaterial
- 7: Elektrode
- 8: Ableiter
- 8a: Grundabschnitt
- 8b: Gelenkabschnitt
- 9: Ablösevorrichtung
- 10: Spalt
- 11: Druckvorrichtung
- 12: Druckfeder
- 13: Druckschaum
- 14: Haltevorrichtung
- 15: Klebestelle
- 16: Knick
- 17: Systemgehäuse
- 18: Antriebssystem
- 19: Elektromotor
- 20: Zellstapel
- 21: Verspannvorrichtung
- 22: Leistungselektronik

- A: Ausgangszustand
- U: Unterbrechungszustand

## Patentansprüche

1. Batteriezelle (1) für ein Batteriesystem (2) für ein Kraftfahrzeug (3), aufweisend eine flexible Zellwandung (4), einen von der Zellwandung (4) gebildeten Zellinnenraum (5), in dem Zellinnenraum (5) angeordnetes Aktivmaterial (6) zum Speichern und Freigeben elektrischer Energie, eine im Zellinnenraum (5) angeordnete, mit dem Aktivmaterial (6) elektrisch gekoppelte Elektrode (7) und einen aus dem Zellinnenraum (5) herausragenden sowie in einem Ausgangszustand (A) mit der Elektrode (7) elektrisch gekoppelten Ableiter (8), wobei im Ausgangszustand (A) ein Druckunterschied zwischen einem Zellinnendruck im Zellinnenraum (5) und einem Zellaußendruck außerhalb des Zellinnenraums (5) kleiner ist als ein vorgegebener Druckschwellwert, wobei die Elektrode (7) und der Ableiter (8) im Ausgangszustand (A) zur Herstellung der elektrischen Kopplung zwischen einen ersten Wandungsabschnitt (4a) und einen zweiten Wandungsabschnitt (4b) der Zellwandung (4) gegeneinander gedrückt sind, wobei die Batteriezelle (1) eine Ablösevorrichtung (9) zum Aufheben der elektrischen Kopplung in einem Unterbrechungszustand (U) aufweist, wobei der Druckunterschied im Unterbrechungszustand (U) dem Druckschwellwert entspricht, wobei die Ablösevorrichtung (9) ausgebildet ist, mit dem Ableiter (8) oder der Elektrode (7) vom Ausgangszustand (A) in den Unterbrechungszustand (U) einer Bewegung des ersten Wandungsabschnitts (4a) vom zweiten Wandungsabschnitt (4b) weg derart zu folgen, dass im Unterbrechungszustand (U) zwischen dem Ableiter (8) und der Elektrode (7) ein Spalt (10) ausgebildet ist, wobei die Ablösevorrichtung (9) eine Druckvorrichtung (11) aufweist,
**dadurch gekennzeichnet, dass** die Druckvorrichtung (11) im Ausgangszustand (A) eine durch den Druckunterschied aufrechterhaltene Vorspannung aufweist und ausgebildet ist, den Ableiter (8) von der Elektrode (7) wegweisend oder die Elektrode (7) vom Ableiter (8) wegweisend in Richtung des ersten Wandungsabschnitts (4a) zu drücken.

2. Batteriezelle (1) nach Anspruch 1,
**dadurch gekennzeichnet,**
**dass** die Druckvorrichtung (11) eine Druckfeder (12) und/oder einen Druckzylinder und/oder einen Druckschaum (13) aufweist oder dass die Druckvorrichtung (11) durch eine Eigenspannung des Ableiters (8) oder der Elektrode (7) realisiert ist.

3. Batteriezelle (1) nach einem der vorangegangenen Ansprüche,
**dadurch gekennzeichnet,**
**dass** die Ablösevorrichtung (9) eine Haltevorrichtung (14) aufweist, wobei die Haltevorrichtung (14) ausgebildet ist, den Ableiter (8) oder die Elektrode (7) am ersten Wandungsabschnitt (4a) zu halten.

4. Batteriezelle (1) nach Anspruch 3,
**dadurch gekennzeichnet,**
**dass** die Haltevorrichtung (14) eine Klebestelle (15) und/oder Lötstelle und/oder Schweißstelle und/oder Crimpstelle aufweist.

5. Batteriezelle (1) nach einem der vorangegangenen Ansprüche,
**dadurch gekennzeichnet,**
**dass** die Elektrode (7) und der Ableiter (8) im Ausgangszustand (A) durch den zwischen dem Zellinnendruck und Zellaußendruck bestehenden Druckunterschied zwischen den ersten Wandungsabschnitt (4a) und den zweiten Wandungsabschnitt (4b) gegeneinandergedrückt sind.

6. Batteriezelle (1) nach einem der vorangegangenen Ansprüche,
**dadurch gekennzeichnet,**
**dass** die Elektrode (7) oder der Ableiter (8) zwischen zwei Grundabschnitten (8a) einen Gelenkabschnitt (8b) zum Verbessern einer gemeinsamen Bewegung mit dem ersten Wandungsabschnitt (4a) aufweist.

7. Batteriezelle (1) nach Anspruch 6,
**dadurch gekennzeichnet,**
**dass** der Gelenkabschnitt (8b) einen Knick (16) und/oder eine Querschnittsverringerung und/oder eine erhöhte Duktilität als die benachbarten Grundabschnitte (8a) aufweist.

8. Batteriesystem (2) für ein Kraftfahrzeug (3), aufweisend ein Systemgehäuse (17), **dadurch gekennzeichnet,**
**dass** im Systemgehäuse (17) mehrere Batteriezellen (1) nach einem der vorangegangenen Ansprüche angeordnet sind.

9. Kraftfahrzeug (3), aufweisend ein elektrisches Antriebssystem (18) mit einem Elektromotor (19) zum Antreiben des Kraftfahrzeugs (3),
**dadurch gekennzeichnet,**
**dass** das Antriebssystem (18) zum Versorgen des Elektromotors (19) mit elektrischer Energie ein Batteriesystem (2) nach Anspruch 8 aufweist.

## Claims

1. Battery cell (1) for a battery system (2) for a motor vehicle (3), comprising a flexible cell wall (4), a cell interior (5) formed by the cell wall (4), active material (6) arranged in the cell interior (5) for storing and releasing electrical energy, an electrode (7) which is arranged in the cell interior (5) and is electrically coupled to the active material (6), and an arrester (8) which protrudes from the cell interior (5) and is electrically coupled to the electrode (7) in an initial state (A), wherein in the initial state (A), a pressure difference between an internal cell pressure in the cell interior (5) and an external cell pressure outside the cell interior (5) is smaller than a predetermined pressure threshold value,
wherein the electrode (7) and the arrester (8) are pressed against one another in the initial state (A) to produce the electrical coupling between a first wall portion (4a) and a second wall portion (4b) of the cell wall (4), wherein the battery cell (1) has a separation device (9) for releasing the electrical coupling in an interruption state (U), wherein the pressure difference in the interruption state (U) corresponds to the pressure threshold value, wherein the separation device (9) is designed to follow with the arrester (8) or the electrode (7), from the initial state (A) to the interruption state (U), a movement of the first wall portion (4a) away from the second wall portion (4b) such that in the interruption state (U), a gap (10) is formed between the arrester (8) and the electrode (7), wherein the separation device (9) has a pressure device (11),
**characterized in that**
the pressure device (11) in the initial state (A) has a preload maintained by the pressure difference and is designed to press the arrester (8) away from the electrode (7) or to press the electrode (7) away from the arrester (8) in the direction of the first wall portion (4a).

2. Battery cell (1) according to claim 1,
**characterized in that**
the pressure device (11) has a compression spring (12) and/or a pressure cylinder and/or a pressure foam (13) **or in that** the pressure device (11) is provided by a residual stress of the arrester (8) or the electrode (7).

3. Battery cell (1) according to either of the preceding claims,
**characterized in that**
the separation device (9) has a holding device (14), wherein the holding device (14) is designed to hold the arrester (8) or the electrode (7) on the first wall portion (4a).

4. Battery cell (1) according to claim 3,
**characterized in that**
the holding device (14) has an adhesive point (15) and/or soldering point and/or welding point and/or crimping point.

5. Battery cell (1) according to any of the preceding claims,
**characterized in that**
the electrode (7) and the arrester (8), in the initial state (A), are pressed against each other by the pressure difference between the internal cell pressure and the external cell pressure that is present between the first wall portion (4a) and the second wall portion (4b).

6. Battery cell (1) according to any of the preceding claims,
**characterized in that**
the electrode (7) or the arrester (8) has a hinge portion (8b) between two main portions (8a) to improve a common movement with the first wall portion (4a).

7. Battery cell (1) according to claim 6,
**characterized in that**
the hinge portion (8b) has a kink (16) and/or a reduction in cross-section and/or an increased ductility compared to the adjacent main portions (8a).

8. Battery system (2) for a motor vehicle (3), comprising a system housing (17),
**characterized in that**
a plurality of battery cells (1) according to any of the preceding claims are arranged in the system housing (17).

9. Motor vehicle (3) comprising an electric drive system (18) having an electric motor (19) for driving the motor vehicle (3),
**characterized in that**
the drive system (18) has a battery system (2) according to claim 8 for supplying the electric motor (19) with electrical energy.

## Revendications

1. Élément de batterie (1) pour un système de batterie (2) pour un véhicule automobile (3), présentant une paroi d'élément flexible (4), un espace intérieur d'élément (5) formé par la paroi d'élément (4), un matériau actif (6) disposé dans l'espace intérieur d'élément (5) pour le stockage et la libération d'énergie électrique, une électrode (7) disposée dans l'espace intérieur d'élément (5), couplée électriquement au matériau actif (6) et un dissipateur (8) dépassant de l'espace intérieur d'élément (5) et couplé électriquement à l'électrode (7) dans un état initial (A), dans lequel, dans l'état initial (A), une différence de pression entre une pression intérieure d'élément dans l'espace intérieur d'élément (5) et une pression extérieure d'élément à l'extérieur de l'espace intérieur d'élément (5) est inférieure à une valeur seuil de pression prédéterminée,
dans lequel l'électrode (7) et le dissipateur (8) sont pressés l'un contre l'autre dans l'état initial (A) pour l'établissement du couplage électrique entre une première section de paroi (4a) et une seconde section de paroi (4b) de la paroi d'élément (4), dans lequel l'élément de batterie (1) présente un dispositif de détachement (9) pour la suppression du couplage électrique dans un état d'interruption (U), dans lequel la différence de pression dans l'état d'interruption (U) correspond à la valeur seuil de pression, dans lequel le dispositif de détachement (9) est conçu pour suivre avec le dissipateur (8) ou l'électrode (7), de l'état initial (A) à l'état d'interruption (U), un mouvement de la première section de paroi (4a) s'éloignant de la seconde section de paroi (4b) de telle sorte qu'à l'état d'interruption (U), une fente (10) est conçue entre le dissipateur (8) et l'électrode (7), dans lequel le dispositif de détachement (9) présente un dispositif de pression (11),
**caractérisé en ce que**
le dispositif de pression (11) présente, dans l'état initial (A), une précontrainte maintenue par la différence de pression et est conçu pour presser le dissipateur (8) en l'éloignant de l'électrode (7) ou pour presser l'électrode (7) en l'éloignant du dissipateur (8) en direction de la première section de paroi (4a).

2. Élément de batterie (1) selon la revendication 1,
**caractérisé en ce**
**que** le dispositif de pression (11) présente un ressort de pression (12) et/ou un cylindre de pression et/ou une mousse de pression (13) ou **en ce que** le dispositif de pression (11) est réalisé par une tension propre du dissipateur (8) ou de l'électrode (7).

3. Élément de batterie (1) selon l'une des revendications précédentes,
**caractérisé en ce**
**que** le dispositif de détachement (9) présente un dispositif de maintien (14), dans lequel le dispositif de maintien (14) est conçu pour maintenir le dissipateur (8) ou l'électrode (7) sur la première section de paroi (4a).

4. Élément de batterie (1) selon la revendication 3,
**caractérisé en ce**
**que** le dispositif de maintien (14) présente un point de collage (15) et/ou un point de brasage et/ou un point de soudage et/ou un point de sertissage.

5. Élément de batterie (1) selon l'une des revendications précédentes,
**caractérisé en ce**
**que** l'électrode (7) et le dissipateur (8) sont pressés l'un contre l'autre dans l'état initial (A) par la différence de pression existant entre la pression interne d'élément et la pression externe d'élément entre la première section de paroi (4a) et la seconde section de paroi (4b).

6. Élément de batterie (1) selon l'une des revendications précédentes,
**caractérisé en ce**
**que** l'électrode (7) ou le dissipateur (8) présente, entre deux sections de base (8a), une section d'articulation (8b) pour l'amélioration d'un mouvement conjoint avec la première partie de paroi (4a).

7. Élément de batterie (1) selon la revendication 6,
**caractérisé en ce**
**que** la section d'articulation (8b) présente un coude (16) et/ou une réduction de la section transversale et/ou une ductilité accrue par rapport aux sections de base (8a) voisines.

8. Système de batterie (2) pour un véhicule automobile (3), présentant un boîtier de système (17),
**caractérisé en ce**
**que** plusieurs éléments de batterie (1) selon l'une des revendications précédentes sont disposés dans le boîtier de système (17).

9. Véhicule automobile (3), présentant un système d'entraînement électrique (18) comportant un moteur électrique (19) pour l'entraînement du véhicule automobile (3),
**caractérisé en ce**
**que** le système d'entraînement (18) présente un système de batterie (2) selon la revendication 8 pour l'alimentation du moteur électrique (19) en énergie électrique.
